(19) Europäisches Patentamt
European Patent Office
Office européen des brevets

(11) **EP 4 207 919 B1**

(12) **EUROPEAN PATENT SPECIFICATION**

(45) Date of publication and mention
of the grant of the patent:
**25.02.2026 Bulletin 2026/09**

(21) Application number: **20955596.0**

(22) Date of filing: **29.09.2020**

(51) International Patent Classification (IPC):
*H04W 74/00* ^(2009.01)   *H04W 74/08* ^(2024.01)
*H04B 1/7143* ^(2011.01)   *H04B 7/0456* ^(2017.01)
*H04W 74/0833* ^(2024.01)   *H04L 1/08* ^(2006.01)
*H04L 1/1829* ^(2023.01)   *H04L 1/1867* ^(2023.01)

(52) Cooperative Patent Classification (CPC):
**H04B 1/7143; H04B 7/0456; H04L 1/08;
H04L 1/1864; H04L 1/189; H04W 74/0833**

(86) International application number:
**PCT/CN2020/119038**

(87) International publication number:
**WO 2022/067571 (07.04.2022 Gazette 2022/14)**

(54) **COMMUNICATION METHODS AND APPARATUS**

KOMMUNIKATIONSVERFAHREN UND -VORRICHTUNGEN

PROCÉDÉS ET APPAREILS DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2023 Bulletin 2023/27**

(73) Proprietor: **Huawei Technologies Co., Ltd.
Shenzhen, Guangdong 518129 (CN)**

(72) Inventors:
• **YU, Jian
  Shenzhen, Guangdong 518129 (CN)**
• **YU, Yawei
  Shenzhen, Guangdong 518129 (CN)**
• **GUO, Zhiheng
  Shenzhen, Guangdong 518129 (CN)**

(74) Representative: **Thun, Clemens
Mitscherlich PartmbB
Patent- und Rechtsanwälte
Karlstraße 7
80333 München (DE)**

(56) References cited:
EP-A1- 3 697 139          WO-A1-2015/109512
WO-A1-2019/095307      WO-A1-2019/160359

CN-A- 104 780 617       CN-A- 108 347 789

• **"3rd Generation Partnership Project; Technical
Specification Group Radio Access Network; NR;
Physical layer procedures for data (Release 16)",**
20 July 2020 (2020-07-20), XP052300295,
Retrieved from the Internet <URL:https://
ftp.3gpp.org/3guInternal/
3GPP_ultimate_versions_to_be_transposed/
sentToDpc/38214-g20.zip 38214-g20.docx>
[retrieved on 20200720]
• **ERICSSON: "Summary of 7.1.3.1 (DCI contents
and formats)",** vol. RAN WG1, no. Gothenburg,
Sweden; 20180820 - 20180824, 21 August 2018
(2018-08-21), XP051517053, Retrieved from the
Internet <URL:http://www.3gpp.org/ftp/tsg%
5Fran/WG1%5FRL1/TSGR1%5F94/Docs/R1%
2D1809701%2Ezip> [retrieved on 20180821]
• **MODERATOR (CHINA TELECOM): "[102-e-NR-
CovEnh-03] Email discussion/approval on
PUSCH coverage enhancement",** vol. RAN WG1,
no. E-meeting; 20200817 - 20200828, 29 August
2020 (2020-08-29), XP052348771, Retrieved from
the Internet <URL:https://ftp.3gpp.org/tsg_ran/
WG1_RL1/TSGR1_102-e/Docs/R1-2007404.zip
R1-2007404 - [102-e-NR-CovEnh-03].docx>
[retrieved on 20200829]

- **SAMSUNG: "Discussion on msg3 power determination", vol. RAN WG1, no. e-Meeting; 20200817 - 20200828, 7 August 2020 (2020-08-07), XP052347461, Retrieved from the Internet <URL:https://ftp.3gpp.org/tsg_ran/ WG1_RL1/TSGR1_102-e/Docs/R1-2006087.zip R1-2006087 Discussion on msg3 power determination.docx> [retrieved on 20200807]**
- **MEDIATEK INC: "Draft CR on correction for Msg3 PUSCH retransmission power control", vol. RAN WG1, no. e-Meeting; 20200817 - 20200828, 8 August 2020 (2020-08-08), XP052347004, Retrieved from the Internet <URL:https:// ftp.3gpp.org/tsg_ran/WG1_RL1/TSGR1_102-e/ Docs/R1-2005630.zip R1-2005630 Draft CR on correction for Msg3 PUSCH retransmission power control_final.docx> [retrieved on 20200808]**
- **MODERATOR (ZTE CORPORATION): "Feature lead summary on coverage enhancement for channels other than PUSCH and PUCCH", vol. RAN WG1, no. e-Meeting; 20200817 - 20200828, 29 August 2020 (2020-08-29), XP052348759, Retrieved from the Internet <URL:https:// ftp.3gpp.org/tsg_ran/WG1_RL1/TSGR1_102-e/ Docs/R1-2007392.zip R1-2007392 Feature lead summary on coverage enhancement for channels other than PUSCH and PUCCH.docx> [retrieved on 20200829]**
- **"3rd Generation Partnership Project; Technical Specification Group Radio Access Network; NR; Physical layer procedures for control (Release 16)", 20 July 2020 (2020-07-20), XP052300289, Retrieved from the Internet <URL:https:// ftp.3gpp.org/3guInternal/ 3GPP_ultimate_versions_to_be_transposed/ sentToDpc/38213-g20.zip 38213-g20.docx> [retrieved on 20200720]**
- **MODERATOR (ZTE CORPORATION): "Feature lead summary on coverage enhancement for channels other than PUSCH and PUCCH", 3GPP DRAFT; R1-2007392, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20200817 - 20200828, 29 August 2020 (2020-08-29), Mobile Competence Centre ; 650, route des Lucioles ; F-06921 Sophia-Antipolis Cedex ; France , XP051922984**
- **HUAWEI, HISILICON: "Consideration on RACH procedure", 3GPP DRAFT; R2-151297 CONSIDERATION ON RACH PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Bratislava, Slovakia; 20150420 - 20150424, 19 April 2015 (2015-04-19), Mobile Competence Centre ; 650, route des Lucioles ; F-06921 Sophia-Antipolis Cedex ; France , XP050936246**

Description

## TECHNICAL FIELD

This application relates to the field of wireless communication technologies, and in particular, to communication methods and apparatus.

## BACKGROUND

In wireless communication systems such as long term evolution (long term evolution, LTE) systems or new radio (new radio, NR) systems, a terminal device in idle mode or inactive (inactive) mode may access a base station through a random access procedure. In the random access procedure, the terminal device sends a message 3 (message 3, Msg 3) through a physical uplink shared channel (physical uplink shared channel, PUSCH).

In the random access procedure, a radio resource control (radio resource control, RRC) connection has not been established between the terminal device and a network device. Therefore, in a coverage-limited scenario, because a signal to interference plus noise ratio (signal to interference plus noise ratio, SINR) is low, a transmission success rate of the message 3 is low. If the message 3 fails to be transmitted, although a probability of successful transmission of the message 3 can be increased through retransmission, an access delay is increased. In addition, the terminal device may be completely unable to access a network. This affects normal communication.

In conclusion, how to enhance coverage of the message 3 to improve the transmission success rate of the message 3 and therefore improve a success rate of randomly accessing the network by the terminal device is an urgent problem to be resolved.

The document EP 3 697 139 Al shows a method and device for transmitting messages. Especially, a repeated transmission using the same transmit power is shown.

## SUMMARY

The present invention is defined by the independent claims. Further advantageous developments are shown by the dependent claims.

## BRIEF DESCRIPTION OF DRAWINGS

FIG. 1 is a schematic diagram of a network architecture applicable to this application;
FIG. 2 is a schematic diagram of a random access procedure in a current technology;
FIG. 3 is a schematic flowchart of a communication method according to an embodiment of this application;
FIG. 4 is a schematic diagram of joint channel estimation according to an embodiment of this application;
FIG. 5 is a schematic diagram of a frequency hopping mode according to an embodiment of this application;
FIG. 6 is a schematic diagram of a frequency hopping mode according to an embodiment of this application;
FIG. 7 is a schematic diagram of a frequency hopping mode according to an embodiment of this application;
FIG. 8 is a schematic diagram of a frequency hopping mode according to an embodiment of this application;
FIG. 9 is a schematic diagram of a frequency hopping mode according to an embodiment of this application;
FIG. 10 is a schematic diagram of a frequency hopping mode according to an embodiment of this application;
FIG. 11 is a schematic diagram of a structure of a communication apparatus according to an embodiment of this application; and
FIG. 12 is a schematic diagram of a structure of a communication apparatus according to an embodiment of this application.

## DESCRIPTION OF EMBODIMENTS

The following further describes in detail embodiments of this application with reference to the accompanying drawings.

Technical solutions in embodiments of this application may be applied to various communication systems, for example, a long term evolution (Long Term Evolution, LTE) system, an LTE frequency division duplex (Frequency Division Duplex, FDD) system, an LTE time division duplex (Time Division Duplex, TDD) system, and a new radio (New Radio, NR) system. This is not limited herein.

A terminal device in embodiments of this application is an entity that is on a user side and that is configured to receive or transmit a signal. The terminal device may be a handheld device, an in-vehicle device, or the like that has a wireless connection function. Alternatively, the terminal device may be another processing device connected to a wireless modem. The terminal device may also be referred to as a wireless terminal, an access point (access point), a remote terminal (remote terminal), an access terminal (access terminal), a user terminal (user terminal), a user agent (user agent), a user device (user device), user equipment (user equipment, UE), or the like. The terminal device may be a mobile terminal, for example, a mobile phone (or also referred to as a "cellular" phone) and a computer that has a mobile terminal. For example, the terminal device may be a portable, pocket-size, handheld, computer built-in or in-vehicle mobile apparatus, which exchanges a voice and/or data with a radio access network. For example, common terminal devices include a mobile phone, a tablet computer, a notebook computer, a palmtop computer, a mobile Internet device (mobile Internet device, MID), and a wearable device, for example, a smartwatch, a smart band, and a pedometer. However, embodiments of this application are not limited thereto.

A network device in embodiments of this application is mainly responsible for providing a wireless connection for the terminal device, to ensure reliable transmission of uplink and downlink data of the terminal device, and the like. The network device may be a next generation NodeB (next Generation node B, gNB) in an NR system, may be an evolved NodeB (evolutional node B, eNB) in an LTE system, or the like. When the network device is a gNB, the network device may include a central unit (centralized unit, CU) and a distributed unit (distributed unit, DU).

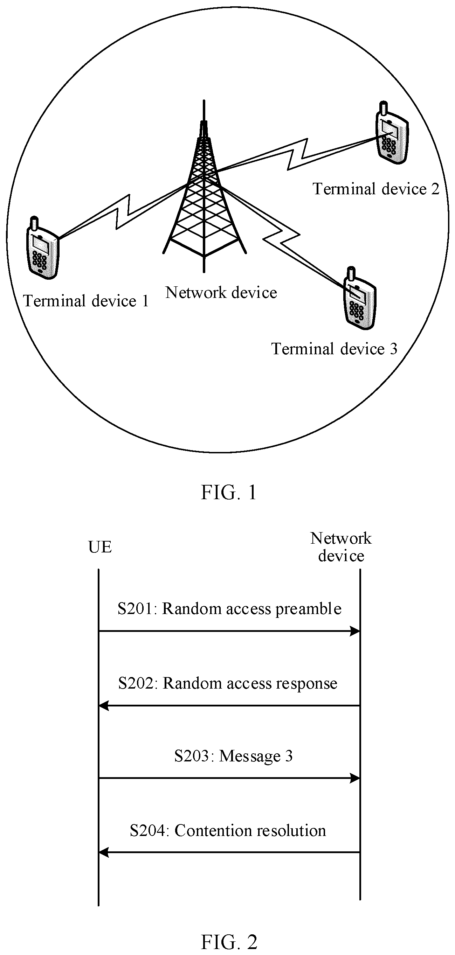

A method provided in embodiments of this application may be applied to a communication system shown in FIG. 1. A single-cell communication system includes a network device and a terminal device 1 to a terminal device 3. The terminal device 1 to the terminal device 3 may separately or simultaneously send uplink data to the network device, and the network device may separately or simultaneously send downlink data to the terminal device 1 to the terminal device 3. It should be understood that FIG. 1 is merely an example for description, and does not specifically limit a quantity of terminal devices in the communication system, a quantity of network devices in the communication system, and a quantity of cells covered by the network device.

This application is applicable to a random access procedure. In wireless communication systems such as an LTE system and an NR system, UE may enter a radio resource control (radio resource control, RRC) RRC connected mode from an idle mode or an inactive (inactive) mode through random access, establish various bearers with a network device, obtain some necessary resources and parameter configurations, and further communicate with the network device. Currently, in the wireless communication systems such as the LTE system and the NR system, the UE generally performs random access through the following procedure, as shown in FIG. 2.

S201: The UE sends a random access preamble (random access preamble) to the network device.

The random access preamble may also be referred to as a message 1 (message 1, Msg1) or a random access request. A function of the random access preamble is to notify the network device that there is a random access request.

S202: The network device sends a random access response (random access response, RAR) to the UE after detecting the random access preamble. The random access response may also be referred to as a message 2 (message 2, Msg2). The random access response includes scheduling information of a message 3, namely, RAR uplink (uplink, UL) grant (grant) information. The random access response may further include other information. Details are not described herein.

S203: The UE receives the random access response, and sends the message 3 on a time-frequency resource scheduled by using the scheduling information in the random access response. The message 3 is carried on a physical uplink shared channel (physical uplink shared channel, PUSCH). The message 3 may carry information such as a unique user identifier of the UE.

S204: The network device receives the message 3 of the UE, and returns a contention resolution message to the successfully accessing UE, where the contention resolution message is also referred to as a message 4 (message 4, Msg4). The network device includes, in the conflict resolution message, the unique user identifier in the message 3, to specify the successfully accessing UE, and other UE that fails in access initiates random access again.

In a current technology, for how to determine transmit power for the message 3, refer to descriptions in the 3rd generation partnership project (the 3rd generation partnership project, 3GPP) technical specification (technical specification, TS) 38.213. According to content in 3GPP TS 38.213, the transmit power for the message 3 is related to a plurality of parameters. A path loss parameter is constantly changing. This significantly affects transmit power for the message 3 at different time points. In addition, when intra-slot frequency hopping and inter-slot frequency hopping are performed on the message 3, because a start position of a frequency domain resource block (resource block, RB) changes, a power back-off value may change. Consequently, the transmit power for the message 3 also changes.

It can be learned from the foregoing process that successful transmission of the message 3 is important to success of the random access procedure. Therefore, this application provides a method to increase a probability of successfully transmitting the message 3, to improve a success rate of the random access. The following provides descriptions in detail.

It should be noted that, network architectures and service scenarios described in embodiments of this application are intended to describe the technical solutions in embodiments of this application more clearly, and do not constitute a limitation on the technical solutions provided in embodiments of this application. A person of ordinary skill in the art may know that: With evolution of the network architectures and emergence of new service scenarios, the technical solutions provided in embodiments of this application are also applicable to similar technical problems.

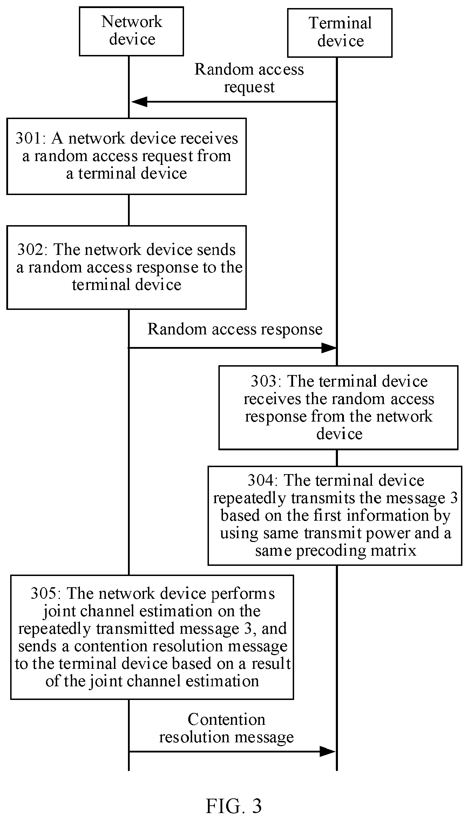

With reference to the foregoing descriptions, FIG. 3 is a schematic flowchart of a communication method according to an embodiment of this application. Refer to FIG. 3. The method includes the following steps.

S301: A network device receives a random access request from a terminal device.

The random access request may be a random access preamble or a message 1 sent by the terminal device. It should be noted that, for how the terminal device specifically sends the random access request and how the network device specifically receives the random access request, refer to descriptions in a current technology. This is not limited in embodiments of this application.

S302: The network device sends a random access response to the terminal device.

The random access response may also be referred to as a message 2, the random access response includes scheduling information of a message 3, and the scheduling information included in the random access response may be an RAR UL grant in the random access response. The scheduling information may include first information, and the first information indicates the terminal device to repeatedly transmit the message 3 by using same transmit power and a same precoding matrix.

It should be noted that, the scheduling information may further include other information in addition to the first information. This is described in detail below.

S303: The terminal device receives the random access response from the network device.

How the terminal device specifically receives the random access response is not limited in embodiments of this application. For details, refer to descriptions in the current technology.

S304: The terminal device repeatedly transmits the message 3 based on the first information by using the same transmit power and the same precoding matrix.

It should be noted that, repeatedly transmitting the message 3 means that after sending the message 3 and before receiving a contention resolution message from the network device, the terminal device sends, on a plurality of transmission occasions, repeated information corresponding to the message 3 or a plurality of redundancy versions (redundancy version, RV) of the message 3. The first time of transmission of the message 3 is referred to as initial transmission, or the $0^{th}$ time of repeated transmission, and subsequent transmission is sequentially referred to as the first time of repeated transmission, the second time of repeated transmission, and the like.

Optionally, transmit power used by the terminal device for each time of repeated transmission of the message 3 is equal to transmit power for the initial transmission of the message 3.

Optionally, a precoding matrix used by the terminal device for each time of repeated transmission of the message 3 is the same as a precoding matrix for the initial transmission of the message 3.

Optionally, when the message 3 is repeatedly transmitted, an index value RV_index of a redundancy version for each time of repeated transmission satisfies the following formula:

$$RV\_index = mod(X-1, L) \ (1).$$

L is a total quantity of redundancy versions, X is a quantity of times of repeated transmission, X is a positive integer greater than or equal to 1, and mod() is a modulo function. For example, the total quantity of redundancy versions is 4, and a set of the redundancy versions is {0, 2, 3, 1}. When RV_index corresponds to 0, the first redundancy version in the set is selected, that is, the redundancy version is 0; when RV_index is 1, the second redundancy version in the set is selected, that is, the redundancy version is 2; when RV_index is 2, the third redundancy version in the set is selected, that is, the redundancy version is 3; and when RV_index is 3, the fourth redundancy version in the set is used, that is, the redundancy version is 1. The foregoing is merely an example, and another mapping relationship between a redundancy version and an index value is not limited in this application.

Through the foregoing procedure, when repeatedly transmitting the message 3, the terminal device uses the same transmit power and the same precoding matrix, so that stability of transmission of the message 3 can be improved, and a transmission success rate of the message 3 can be improved, thereby improving an access success rate of a random access procedure of the terminal device.

Optionally, the method further includes S305: The network device performs joint channel estimation on the repeatedly transmitted message 3, and sends the contention resolution message to the terminal device based on a result of the joint channel estimation.

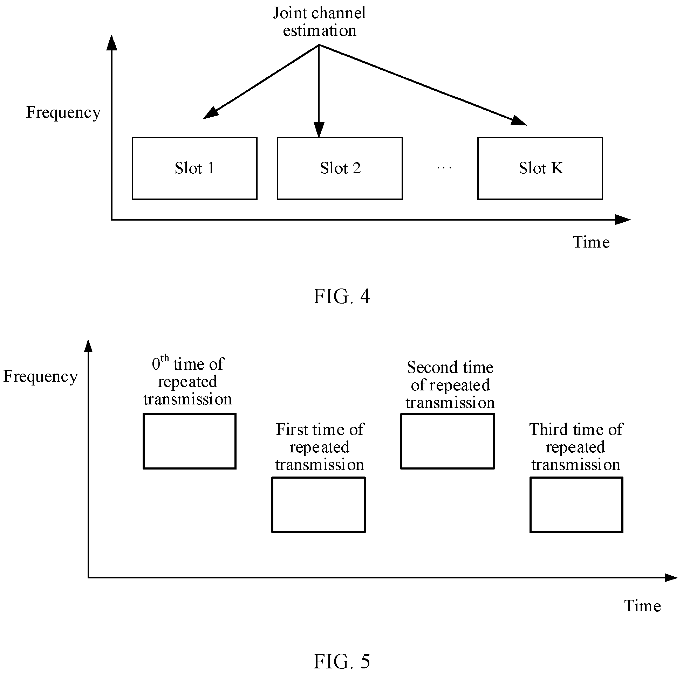

How the network device specifically performs joint channel estimation is not limited in embodiments of this application. For example, as shown in FIG. 4, when the message 3 is repeatedly transmitted for K times, assuming that each time of repeated transmission is performed in one slot (slot) (in other words, a slot-based scheduling method is used), K slots (a slot 1 to a slot K) are required to send the message 3.

If the joint channel estimation is not performed, the network device separately performs channel estimation based on a demodulation reference signal (demodulation reference signal, DMRS) in a PUSCH that carries the message 3 and that is in each slot. If the joint channel estimation is performed, the network device may perform channel estimation jointly based on DMRSs in at least two of the K slots. Using FIG. 4 as an example, the joint channel estimation in this application may mean that channel estimation in the slot 1 may be performed by jointly using a DMRS in the slot 1 and a DMRS in another slot, or channel estimation in the slot 2 may be performed by jointly using a DMRS in the slot 2 and a DMRS in another slot. In other words, the joint channel estimation means that channel estimation in a specific slot or mini (mini) slot may be performed by combining a DMRS in the slot or the mini slot and a DMRS in another slot or mini slot. A quantity of symbols in one mini slot is less than 14. A symbol in embodiments of this application may be an orthogonal frequency division multiplexing (orthogonal frequency division multiplexing, OFDM) symbol, where the OFDM symbol is referred to as a symbol for short below.

Because of correlation of a channel change in terms of time, a more accurate channel estimation result can be obtained through joint channel estimation between a plurality of slots. For example, when a block error rate (Block error rate, BLER) is 0.1, a signal-to-noise ratio (signal noise ratio, SNR) corresponding to joint channel estimation of three slots is approximately 2 dB lower than an SNR obtained without joint channel estimation.

Although the joint channel estimation can improve channel estimation performance, the premise is to ensure that when the terminal device sends the message 3 on the PUSCH, transmit power in slots needs to be consistent, and a phase of a power amplifier is continuous. Otherwise, the joint channel estimation may result in negative gains.

With reference to the foregoing description, because the terminal device repeatedly transmits the message 3 by using the same transmit power and the same precoding matrix each time, the network device can perform joint channel estimation on the repeatedly transmitted message 3, so that time-domain channel correlation can be effectively used, and a more accurate channel estimation result can be obtained, thereby improving a demodulation capability of the PUSCH. Improvement of the demodulation capability of the PUSCH means that the message 3 can be successfully received when a signal to interference plus noise ratio (signal to interference plus noise ratio, SINR) is low, that is, a success rate of receiving the message 3 is improved, so that uplink coverage of the message 3 can be effectively improved without increasing the transmit power of the message 3.

In this embodiment of this application, a field may be added to the scheduling information for scheduling the message 3 to carry the first information. For details, refer to Table 1.

**Table 1**

| Field | Quantity of included bits |
| --- | --- |
| Frequency hopping flag | 1 |
| PUSCH frequency resource allocation | 12 or 14 |
| PUSCH time resource allocation | 4 |
| Modulation and coding scheme | 4 |
| Transmit power control | 3 |
| Channel state information request | 1 |
| Channel access type and cyclic prefix type indication | 0 or 2 |
| First information | 1 |

The first information may also have another name, for example, "Joint channel estimation flag for Msg3 repetition". The quantity of bits included in the first information may be 1, or may be greater than 1. When the first information includes one bit, and a value of the bit is 0, it indicates that the transmit power and the precoding matrix for repeatedly transmitting the message 3 are not limited; or when the value of the bit is 1, it indicates that the transmit power and the precoding matrix for repeatedly transmitting the message 3 are limited, to be specific, the terminal device is indicated to repeatedly transmit the message 3 by using the same transmit power and the same precoding matrix.

Certainly, there may alternatively be a converse case. To be specific, when the value of the bit is 1, it indicates that the transmit power and the precoding matrix for repeatedly transmitting the message 3 are not limited; or when the value of the bit is 0, it indicates that the transmit power and the precoding matrix for repeatedly transmitting the message 3 are limited. When the first information includes another quantity of bits, refer to the foregoing descriptions. Details are not described herein again.

The foregoing describes a case in which the scheduling information includes the first information. In this embodiment of this application, the scheduling information may further include other information, for example, include one or more of the following information:

second information, where the second information indicates a repetition type of the message 3;

third information, where the third information indicates a frequency hopping mode for repeatedly transmitting the message 3; and

fourth information, where the fourth information indicates a quantity of times of repeated transmission of the message 3.

The second information may also be referred to as a name such as repetition type (repetition type) information. The repetition type indicated by the second information may be a first repetition type or a second repetition type. The first repetition type may refer to a repetition type A, and the second repetition type may refer to a repetition type B. For specific meanings of the repetition type A and the repetition type B, refer to descriptions in 3GPP TS 38.214. Details are not described herein again.

The first repetition type and the second repetition type may also be other types. For example, when the first repetition type is used, and the message 3 is repeatedly transmitted, an index value of a start symbol for each time of repeated transmission of the message 3 is the same, and a quantity of symbols for each time of repeated transmission of the message 3 is the same. When the second repetition type is used, and the message 3 is repeatedly transmitted, an index value of a start symbol for each time of repeated transmission of the message 3 may be the same or different, and a quantity of symbols for each time of repeated transmission of the message 3 may be the same or different.

A quantity of bits included in the second information may be 1, or may be greater than 1. When the second information includes one bit, and a value of the bit is 0, it indicates that the repetition type is the first repetition type; or when the value of the bit is 1, it indicates that the repetition type is the second repetition type. Certainly, there may alternatively be a converse case. To be specific, when the value of the bit is 1, it indicates that the repetition type is the first repetition type; or when the value of the bit is 0, it indicates that the repetition type is the second repetition type. When the second information includes another quantity of bits, refer to the foregoing descriptions. Details are not described herein again.

It should be noted that, when the message 3 is retransmitted, the scheduling information is indicated by DCI. A new field may be added to the DCI to indicate the repetition type. If the repetition type is not indicated, a repetition type the same as that used during initial transmission of the message 3 is used by default.

Through the foregoing method, different repetition types are introduced to support repeated transmission of the message 3, to enhance flexibility of repeated transmission, and improve resource utilization during repeated transmission.

In the existing NR standard, because the message 3 does not support repeated transmission, intra-slot frequency hopping is used by default. The frequency hopping flag (frequency hopping flag) field in Table 1 indicates whether frequency hopping transmission is performed on the message 3. When it indicates that frequency hopping transmission is performed, a frequency domain offset of frequency hopping varies according to different values of a bandwidth part (bandwidth part, BWP) in which a PUSCH is located, as shown in the following Table 2 (for specific content of Table 2, refer to descriptions in section 8.3 in 3GPP TS 38.213).

In Table 2, $N_{BWP}^{size}$ represents a quantity of physical resource blocks (physical resource block, PRB) included in the BWP, and $N_{UL,hop}$ represents a value of a frequency hopping indication bit. $N_{UL,hop}$ corresponds to the PUSCH frequency resource allocation (PUSCH frequency resource allocation) field in Table 1.

**Table 2**

| Quantity of PRBs included in the BWP | Value of $N_{UL,hop}$ | Frequency offset of a second hop |
|---|---|---|
| $N_{BWP}^{size} < 50$ | 0 | $\lfloor N_{BWP}^{size}/2 \rfloor$ |
| | 1 | $\lfloor N_{BWP}^{size}/4 \rfloor$ |
| $N_{BWP}^{size} \geq 50$ | 00 | $\lfloor N_{BWP}^{size}/2 \rfloor$ |
| | 01 | $\lfloor N_{BWP}^{size}/4 \rfloor$ |
| | 10 | $-\lfloor N_{BWP}^{size}/4 \rfloor$ |
| | 11 | Reserved |

In Table 2, $\lfloor \ \rfloor$ represents a rounding down operation.

For intra-slot frequency hopping, a start position of an RB may be calculated through the following formula:

$$RB_{start} = \begin{cases} RB_{start} & i = 0 \\ \left( RB_{start} + RB_{offset} \right) \bmod N_{BWP}^{size} & i = 1 \end{cases} \quad (2).$$

$RB_{start}$ refers to a first resource block (resource block, RB) allocated to the terminal device, and the PUSCH frequency resource allocation field in Table 1 indicates specific frequency domain resource allocation. A value of $RB_{offset}$ is a value indicated by the "frequency offset of a second hop" in Table 2. i = 0 is a first hop (that is, there is no offset), and i = 1 is the second hop. Assuming that the message 3 is initially transmitted, i = 0, and $RB_{start}$ remains unchanged. When the message 3 is repeatedly transmitted for the first time, i = 1. In this case, when $N_{UL,hop} = 0$, $RB_{offset} = \left\lfloor N_{BWP}^{size}/2 \right\rfloor$; and when $N_{UL,hop} = 1$, $RB_{offset} = \left\lfloor N_{BWP}^{size}/4 \right\rfloor$.

In this embodiment of this application, performance of the message 3 can be improved by introducing a plurality of frequency hopping modes. Specifically, a plurality of frequency hopping modes may be defined, and the third information may indicate a frequency hopping mode for repeatedly transmitting the message 3. The third information may also be referred to as frequency hopping pattern indication information (frequency hopping pattern indication) or another name. This is not limited in embodiments of this application. In this embodiment of this application, a defined frequency hopping mode may include one or more of the following:

a first frequency hopping mode, in which a first frequency domain position is used for first N times of repeated transmission, and a second frequency domain position is used for subsequent M times of repeated transmission, where N is an integer greater than 0, M is an integer greater than 0, and N+M is greater than 2;

a second frequency hopping mode, including X times of repeated transmission, where frequency domain positions for an $i^{th}$ time of repeated transmission and an $(i+L)^{th}$ time of repeated transmission are the same, and frequency domain positions for at least two times of repeated transmission from the $i^{th}$ time of repeated transmission to an $(i+L-1)^{th}$ time of repeated transmission are different, where X is an integer greater than 2, i is 0, 1, ..., or X-1, and L is an integer less than X; and

a third frequency hopping mode, including X times of repeated transmission, where a frequency domain position for each of the X times of repeated transmission is different.

For example, FIG. 5 is a schematic diagram of a frequency hopping mode according to an embodiment of this application. The frequency hopping mode shown in FIG. 5 may be the second frequency hopping mode. That is, X = 4 times of repeated transmission and L = 2 are used as an example. If the repetition type is the first repetition type, a frequency hopping position for each time of repeated transmission is calculated according to the following formula:

$$RB_{start}(n_s^{\mu}) = \begin{cases} RB_{start} & n_s^{\mu} \bmod 2 = 0 \\ (RB_{start} + RB_{offset}) \bmod N_{BWP}^{size} & n_s^{\mu} \bmod 2 = 1 \end{cases} \quad (3a).$$

If the repetition type is the second repetition type, the frequency hopping position for each time of repeated transmission is calculated according to the following formula:

$$RB_{start}(i) = \begin{cases} RB_{start} & i \bmod 2 = 0 \\ (RB_{start} + RB_{offset}) \bmod N_{BWP}^{size} & i \bmod 2 = 1 \end{cases} \quad (3b).$$

$n_s^{\mu}$ is a slot index in one radio frame (10 ms), and $RB_{offset}$ uses a value in Table 2. It can be learned from FIG. 5 that a same frequency domain position is used in the $0^{th}$ repeated transmission and the second repeated transmission; and a same frequency domain position is used in the first repeated transmission and the third repeated transmission, and the frequency domain position is offset by $RB_{offset}$ from the frequency domain position in the $0^{th}$ repeated transmission.

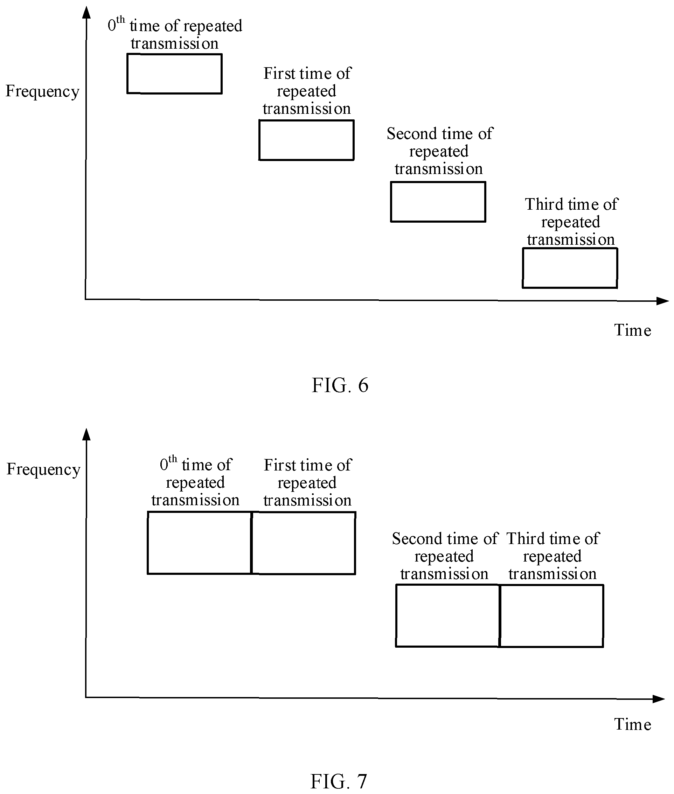

For example, FIG. 6 is a schematic diagram of a frequency hopping mode according to an embodiment of this application. The frequency hopping mode shown in FIG. 6 may be the third frequency hopping mode. Using X = 4 times of repeated transmission as an example. a frequency hopping position for each time of repeated transmission is calculated according to the following formula:

$$RB_{\text{start}}(n_s^{\mu}) = \begin{cases} RB_{\text{start}} & n_s^{\mu} \bmod 4 = 0 \\ (RB_{\text{start}} + RB_{\text{offset}}(\text{k})) \bmod N_{BWP}^{size} & n_s^{\mu} \bmod 4 = 1 \text{ or } 2 \text{ or } 3 \end{cases} \quad (4\text{a}).$$

$RB_{\text{offset}}(k)$ represents a frequency domain offset of a different slot, $n_s^{\mu}$ is a slot index, and $k = n_s^{\mu} \bmod 4$. It can be learned from FIG. 6 that different frequency domain positions are used for the 0th repeated transmission to the third repeated transmission.

Optionally, frequency hopping positions for different repeated transmission may be further calculated according to the following formula:

$$RB_{\text{start}}(n_s^{\mu}) = \begin{cases} RB_{\text{start}} & n_s^{\mu} \bmod 4 = 0 \\ (RB_{\text{start}} + RB_{\text{offset}}(1)) \bmod N_{BWP}^{size} & n_s^{\mu} \bmod 4 = 1 \\ (RB_{\text{start}} + RB_{\text{offset}}(2)) \bmod N_{BWP}^{size} & n_s^{\mu} \bmod 4 = 2 \\ (RB_{\text{start}} + RB_{\text{offset}}(3)) \bmod N_{BWP}^{size} & n_s^{\mu} \bmod 4 = 3 \end{cases} \quad (4\text{b}).$$

In this embodiment of this application, when the frequency hopping mode is the first frequency hopping mode, if the repetition type is the first repetition type, the frequency hopping position of the ith time of repeated transmission is calculated according to the following formula:

$$RB_{\text{start}}(i) = \begin{cases} RB_{\text{start}} & i \leq \lceil X/2 \rceil \\ (RB_{\text{start}} + RB_{\text{offset}}) \bmod N_{BWP}^{size} & i > \lfloor X/2 \rfloor \end{cases} \quad (5\text{a}).$$

$\lceil \ \rceil$ represents rounding up, and X represents a quantity of times of repeated transmission.

If the repetition type is the second repetition type, the frequency hopping position of the ith repeated transmission is calculated according to the following formula:

$$RB_{\text{start}}(i) = \begin{cases} RB_{\text{start}} & \lfloor i/2 \rfloor \bmod 2 = 0 \\ (RB_{\text{start}} + RB_{\text{offset}}) \bmod N_{BWP}^{size} & \lfloor i/2 \rfloor \bmod 2 = 1 \end{cases} \quad (5\text{b}).$$

For example, FIG. 7 is a schematic diagram of a frequency hopping mode according to an embodiment of this application. The frequency hopping mode shown in FIG. 7 may be the first frequency hopping mode. For example, M = 2 and N = 2. A same frequency domain position is used for the first two times of repeated transmission, and frequency domain positions of the last two times of repeated transmission are different from that of the first two times of repeated transmission.

Formula (5a) may also have other variations, for example, may be equivalent to formula (6):

$$RB_{\text{start}}(n_s^{\mu}) = \begin{cases} RB_{\text{start}} & \lfloor n_s^{\mu}/2 \rfloor \bmod 2 = 0 \\ (RB_{\text{start}} + RB_{\text{offset}}) \bmod N_{BWP}^{size} & \lfloor n_s^{\mu}/2 \rfloor \bmod 2 = 1 \end{cases} \quad (6).$$

Meanings of parameters in formula (6) are the same as those of corresponding parameters in the foregoing formula. For details, refer to the foregoing descriptions. Details are not described herein again.

The foregoing uses an example in which the quantity of times of repeated transmission is equal to 4 for description, and the following uses an example in which the quantity of times of repeated transmission is equal to 8 for description.

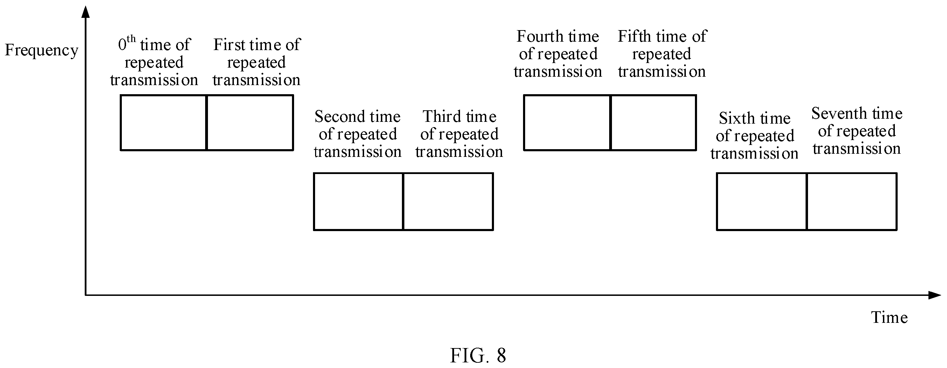

FIG. 8 is a schematic diagram of a frequency hopping mode according to an embodiment of this application. The frequency hopping mode shown in FIG. 8 may be the second frequency hopping mode. That is, X = 8 times of repeated transmission and L = 5 are used as an example. If the repetition type is the first repetition type, a frequency hopping position for each time of repeated transmission is calculated according to the following formula:

$$RB_{start}(n_s^\mu) = \begin{cases} RB_{start} & \left\lfloor n_s^\mu/2 \right\rfloor \bmod 2 = 0 \\ (RB_{start} + RB_{offset}) \bmod N_{BWP}^{size} & \left\lfloor n_s^\mu/2 \right\rfloor \bmod 2 = 1 \end{cases}$$ (7).

Meanings of parameters in formula (7) are the same as those of corresponding parameters in the foregoing formula. For details, refer to the foregoing descriptions. Details are not described herein again.

It should be noted that, if the repetition type is the second repetition type, the frequency hopping position for each time of repeated transmission may be determined according to formula (5b), and details are not described herein.

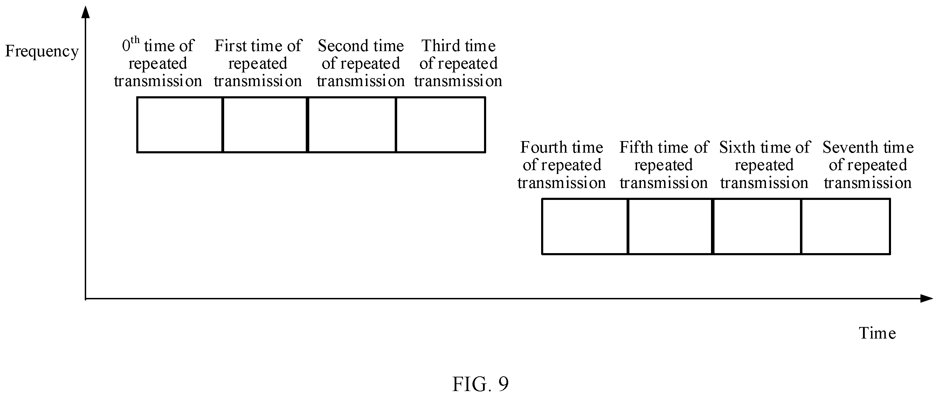

FIG. 9 is a schematic diagram of a frequency hopping mode according to an embodiment of this application. The frequency hopping mode shown in FIG. 9 may be the first frequency hopping mode, that is, M = 4 and N = 4 are used as an example. If the repetition type is the first repetition type, the frequency hopping position for each time of repeated transmission is calculated according to any one of the following formulas:

$$RB_{start}(i) = \begin{cases} RB_{start} & i \leq \lceil X/2 \rceil \\ (RB_{start} + RB_{offset}) \bmod N_{BWP}^{size} & i > \lceil X/2 \rceil \end{cases}$$ (8);

and

$$RB_{start}(n_s^\mu) = \begin{cases} RB_{start} & \left\lfloor n_s^\mu/4 \right\rfloor \bmod 2 = 0 \\ (RB_{start} + RB_{offset}) \bmod N_{BWP}^{size} & \left\lfloor n_s^\mu/4 \right\rfloor \bmod 2 = 1 \end{cases}$$ (9a).

Meanings of parameters in formula (8) and formula (9a) are the same as those of corresponding parameters in the foregoing formula. For details, refer to the foregoing descriptions. Details are not described herein again. In FIG. 9, a same frequency domain position is used for the first four times of repeated transmission, a same frequency domain position is used for the last four times of repeated transmission, and the frequency domain position of the last four times of repeated transmission is different from that of the first four times of repeated transmission.

If the repetition type is the second repetition type, the frequency hopping position for each time of repeated transmission is calculated according to the following formula:

$$RB_{start}(i) = \begin{cases} RB_{start} & \left\lfloor i/2 \right\rfloor \bmod 4 = 0 \\ (RB_{start} + RB_{offset}) \bmod N_{BWP}^{size} & \left\lfloor i/2 \right\rfloor \bmod 4 = 1 \end{cases}$$ (9b).

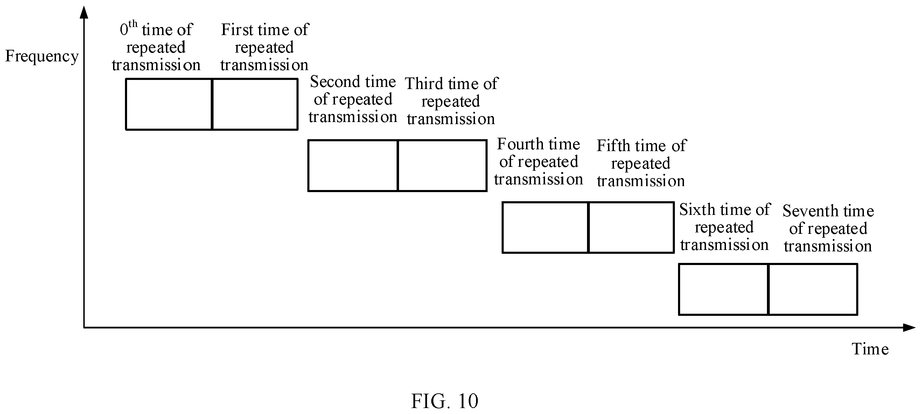

The foregoing is merely an example, and there may be another frequency hopping mode. For example, FIG. 10 is a schematic diagram of a frequency hopping mode according to an embodiment of this application. The frequency hopping mode shown in FIG. 10 includes eight times of repeated transmission. A same frequency domain position is used for the 0th repeated transmission and the first repeated transmission. A same frequency domain position is used for the second repeated transmission and the third repeated transmission. A same frequency domain position is used for the fourth repeated transmission and the fifth repeated transmission. A same frequency domain position is used for the sixth repeated transmission and the seventh repeated transmission.

If the repetition type is the first repetition type, the frequency hopping mode shown in FIG. 10 can satisfy the following formula:

$$RB_{start}(n_s^\mu) = \begin{cases} RB_{start} & n_s^\mu \bmod 4 = 0 \\ (RB_{start} + RB_{offset}(k)) \bmod N_{BWP}^{size} & n_s^\mu \bmod 4 = 1 \text{ or } 2 \text{ or } 3 \end{cases}$$ (10a).

Meanings of parameters in formula (10) are the same as those of corresponding parameters in the foregoing formula. For details, refer to the foregoing descriptions. Details are not described herein again.

Optionally, frequency hopping positions for different repeated transmission may be further calculated according to the following formula:

$$RB_{\text{start}}(n_s^\mu) = \begin{cases} RB_{\text{start}} & n_s^\mu \bmod 4 = 0 \\ (RB_{\text{start}} + RB_{\text{offset}}(1)) \bmod N_{BWP}^{size} & n_s^\mu \bmod 4 = 1 \\ (RB_{\text{start}} + RB_{\text{offset}}(2)) \bmod N_{BWP}^{size} & n_s^\mu \bmod 4 = 2 \\ (RB_{\text{start}} + RB_{\text{offset}}(3)) \bmod N_{BWP}^{size} & n_s^\mu \bmod 4 = 3 \end{cases} \quad (10b).$$

If the repetition type is the second repetition type, the frequency hopping mode shown in FIG. 10 can satisfy the following formula:

$$RB_{\text{start}}(i) = \begin{cases} RB_{\text{start}} & i \bmod 4 = 0 \\ (RB_{\text{start}} + RB_{\text{offset}}(k)) \bmod N_{BWP}^{size} & i \bmod 4 = 1 \text{ or } 2 \text{ or } 3 \end{cases} \quad (10c).$$

$RB_{\text{offset}}(k)$ represents a frequency domain offset of a $k^{th}$ repeated transmission, $n_s^\mu$ is a slot index, and $k = n_s^\mu \bmod 4$. As described above, when the message 3 is repeatedly transmitted, which frequency hopping mode needs to be selected needs to be indicated by the third information in the scheduling information. In this embodiment of this application, the third information may be alternatively carried in a system information block 1 (system information block 1, SIB 1) or carried in other system information (other system information, OSI).

The third information may include at least one bit. When the third information includes one bit, and a value of the bit is 0, the first frequency hopping mode is indicated; or when the value of the bit is 1, the second frequency hopping mode is indicated. Certainly, there may alternatively be a converse case. To be specific, when the value of the bit is 1, the first frequency hopping mode is indicated; or when the value of the bit is 0, the second frequency hopping mode is indicated. When the third information includes another quantity of bits, refer to the foregoing descriptions. Details are not described herein again.

Further, if there are a plurality of (more than two) start positions of $RB_{\text{start}}$, the indication of $RB_{\text{offset}}$ needs to be newly defined. More frequency hopping positions help obtain more frequency domain diversity gains. For an indication of the frequency offset, refer to Table 3.

**Table 3**

| Quantity of PRBs included in the BWP | Value of $N_{UL,hop}$ | Frequency offset of a second hop |
|---|---|---|
| $N_{BWP}^{size} < 50$ | 0 | $RB_{\text{offset}}$ set 1 |
| | 1 | $RB_{\text{offset}}$ set 2 |
| $N_{BWP}^{size} \geq 50$ | 00 | $RB_{\text{offset}}$ set 1 |
| | 01 | $RB_{\text{offset}}$ set 2 |
| | 10 | $RB_{\text{offset}}$ set 3 |
| | 11 | $RB_{\text{offset}}$ set 4 |

In Table 3, a value of one $N_{UL,hop}$ indicates a frequency domain offset set, that is, an $RB_{\text{offset}}$ set 1, an $RB_{\text{offset}}$ set 2, an $RB_{\text{offset}}$ set 3, and an $RB_{\text{offset}}$ set 4. Each set predefines a different $RB_{\text{offset}}$. Using four times of repeated transmission as an example, frequency domain offset positions included in the $RB_{\text{offset}}$ set 1 may be $\{\lfloor N_{BWP}^{size}/2 \rfloor, \lfloor N_{BWP}^{size}/4 \rfloor, -\lfloor N_{BWP}^{size}/4 \rfloor\}$. $RB_{\text{offset}}(k)$ corresponds to a value of a $k^{th}$ element in the set. For example, $RB_{\text{offset}}(1)$ corresponds to the first element $\lfloor N_{BWP}^{size}/2 \rfloor$, $RB_{\text{offset}}(2)$ corresponds to $\lfloor N_{BWP}^{size}/4 \rfloor$, and $RB_{\text{offset}}(3)$ corresponds to $-\lfloor N_{BWP}^{size}/4 \rfloor$. Because there may be many possible values of $RB_{\text{offset}}$ in each set, the values are not listed one by one herein. When the quantity of times the message 3 is repeatedly transmitted is greater than 2, and a quantity of candidate frequency hopping positions selected during frequency hopping pattern selection is greater than 2, Table 3 may be applied to indicate a value of $RB_{offset}$. If the quantity of candidate frequency hopping positions in the selected frequency hopping mode is less than or equal to 2, the table in the existing standard may still be used.

It should be noted that, when the message 3 is retransmitted, the scheduling information of the message 3 is indicated by DCI. During retransmission, a new field may be added to the DCI to indicate a frequency hopping mode. If a frequency hopping mode is not indicated, a frequency hopping mode the same as that for initial transmission is used by default.

In this embodiment of this application, the fourth information may be further used to indicate the quantity of times of repeated transmission of the message 3. In a first possible implementation, the fourth information may directly indicate the quantity of times of repeated transmission. For example, the fourth information may be the quantity of times of repeated transmission, or the fourth information may be an index value of the quantity of times of repeated transmission, for example, as shown in Table 4.

**Table 4**

| Fourth information | Index value | Quantity of times of repeated transmission |
|---|---|---|
| 00 | 00 | 1 |
| 01 | 01 | 2 |
| 10 | 10 | 4 |
| 11 | 11 | 8 |

With reference to Table 4, when the fourth information is 01, it indicates that the quantity of times of repeated transmission is 2. Other cases are not described again.

In a second possible implementation, the fourth information may indirectly indicate the quantity of times of repeated transmission. For example, the fourth information may indicate an index value of a relational expression used to determine the quantity of times of repeated transmission. Through this method, the quantity of times of repeated transmission can be flexibly indicated, for example, as shown in Table 5.

**Table 5**

| Fourth information | Index value | Quantity of times of repeated transmission |
|---|---|---|
| 00 | 00 | Relational expression 1: Y/(8H) |
| 01 | 01 | Relational expression 2: Y/(4H) |
| 10 | 10 | Relational expression 3: Y/(2H) |
| 11 | 11 | Relational expression 4: Y/H |

With reference to Table 5, when the fourth information is 01, relational expression 2 is indicated. When values of Y and H are determined, the quantity of times of repeated transmission is also determined. Assuming that Y = 16 and H = 1, the quantities of times of repeated transmission in Table 5 are successively 16, 8, 4, and 2. Both Y and H may be default values; or both Y and H are values configured by the network device, for example, configured through the SIB 1; or one of Y and H is a default value, and the other is a value configured by the network device.

Optionally, the fourth information may indirectly indicate the quantity of times of repeated transmission. Another implementation is shown in Table 6.

**Table 6**

| Fourth information | Index value | Quantity of times of repeated transmission |
|---|---|---|
| 00 | 00 | 1*Q |
| 01 | 01 | 2*Q |
| 10 | 10 | 4*Q |
| 11 | 11 | 8*Q |

With reference to Table 6, when the value of Q is determined, the quantity of times of repeated transmission is also determined. If Q is not configured by the network device, Q is set to 1 by default. If Q is configured by the network device, Q is configured through, for example, the SIB1 or another system message.

It may be understood that, to implement the functions in the foregoing embodiment, the network device and the terminal device include corresponding hardware structures and/or software modules for performing the functions. A person of ordinary skill in the art should easily be aware that, in combination with the units and the method steps of the examples described in embodiments disclosed in this application, this application can be implemented by hardware, software, or a combination of hardware and software. Whether a function is implemented by hardware, software, or hardware driven by computer software depends on a particular application scenario and a design constraint of the technical solutions.

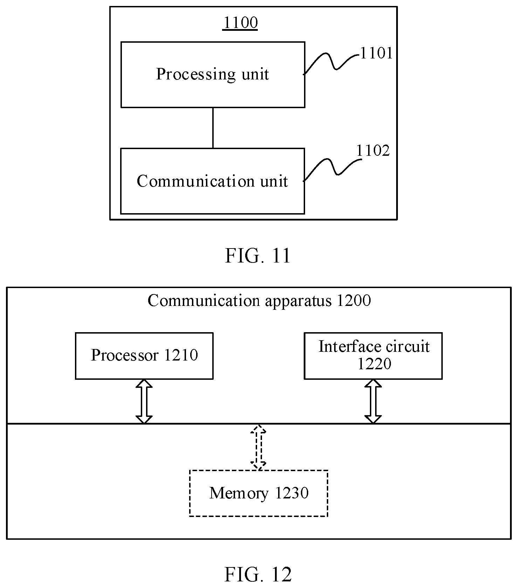

FIG. 11 and FIG. 12 are schematic diagrams of structures of possible communication apparatuses according to an embodiment of this application. Such communication apparatuses may be configured to implement the functions of the terminal device or the network device in the foregoing method embodiments, and therefore can also implement the beneficial effects of the foregoing method embodiments. In embodiments of this application, the communication apparatus may be a terminal device, or may be a network device, or may be a module (for example, a chip) applied to a terminal device or a network device.

As shown in FIG. 11, a communication apparatus 1100 includes a processing unit 1101 and a communication unit 1102. The communication apparatus 1100 is configured to implement the functions of the terminal device or the network device in the method embodiment shown in FIG. 3. Alternatively, the communication apparatus 1100 may include modules configured to implement any function or operation of the terminal device or the network device in the method embodiment shown in FIG. 3. All or some of the modules may be implemented by software, hardware, firmware, or any combination thereof.

When the communication apparatus 1100 is configured to implement the functions of the network device in the method embodiment shown in FIG. 3, the processing unit is configured to receive a random access request from a terminal device through the communication unit; and the processing unit is configured to send a random access response to the terminal device through the communication unit, where the random access response includes scheduling information of a message 3, the scheduling information includes first information, and the first information indicates the terminal device to repeatedly transmit the message 3 by using same transmit power and a same precoding matrix.

When the communication apparatus 1100 is configured to implement the functions of the terminal device in the method embodiment shown in FIG. 3, the processing unit is configured to receive a random access response from a network device through a communication unit, where the random access response includes scheduling information of a message 3, the scheduling information includes first information, and the first information indicates the terminal device to repeatedly transmit the message 3 by using same transmit power and a same precoding matrix; and the processing unit is configured to repeatedly transmit the message 3 based on the first information by using the same transmit power and the same precoding matrix through the communication unit.

For more detailed descriptions of the processing unit 1101 and the communication unit 1102, directly refer to related descriptions in the method embodiment shown in FIG. 3. Details are not described herein again.

As shown in FIG. 12, a communication apparatus 1200 includes a processor 1210 and an interface circuit 1220. The processor 1210 and the interface circuit 1220 are coupled to each other. It may be understood that the interface circuit 1220 may be a transceiver or an input/output interface. Optionally, the communication apparatus 1200 may further include a memory 1230, configured to store instructions executed by the processor 1210, or store input data required by the processor 1210 to run the instructions, or store data generated after the processor 1210 runs the instructions.

When the communication apparatus 1200 is configured to implement the method shown in FIG. 3, the processor 1210 is configured to implement the function of the processing unit 1101, and the interface circuit 1220 is configured to implement the function of the communication unit 1102.

When the communication apparatus is a chip applied to the terminal device, the terminal device chip implements the functions of the terminal device in the foregoing method embodiments. The terminal device chip receives information from another module (for example, a radio frequency module or an antenna) in the terminal device, where the information is sent by the network device to the terminal device; or the terminal device chip sends information to another module (for example, a radio frequency module or an antenna) in the terminal device, where the information is sent by the terminal device to the network device.

When the communication apparatus is a chip applied to the network device, the network device chip implements the functions of the network device in the foregoing method embodiments. The network device chip receives information from another module (for example, a radio frequency module or an antenna) in the network device, where the information is sent by the terminal device to the network device; or the network device chip sends information to another module (for example, a radio frequency module or an antenna) in the network device, where the information is sent by the network device to the terminal device.

It should be noted that, the processor in embodiments of this application may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

The processor in embodiments of this application may be a random access memory (Random Access Memory, RAM), a flash memory, a read-only memory (Read-Only Memory, ROM), a programmable ROM (Programmable ROM, PROM), an erasable PROM (Erasable PROM, EPROM), an electrically EPROM (Electrically EPROM, EEPROM), a register, a hard disk, a removable hard disk, a CD-ROM, or a storage medium of any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may exist in the network device or the terminal device as discrete components.

A person skilled in the art should understand that embodiments of this application may be provided as a method, a system, or a computer program product. Therefore, this application may use a form of a hardware-only embodiment, a software-only embodiment, or an embodiment with a combination of software and hardware. Moreover, this application may use a form of a computer program product that is implemented on one or more computer-usable storage media (including but not limited to a disk memory, an optical memory, and the like) that include computer-usable program code. This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

## Claims

1.  A communication method, comprising:

    receiving (301), a random access request from a terminal device; and
    sending (302), a random access response to the terminal device, wherein the random access response comprises scheduling information of a message 3, the scheduling information comprises first information, and the first information indicates the terminal device to repeatedly transmit the message 3 by using same transmit power and a same precoding matrix as in previous transmissions,
    wherein the scheduling information further comprises second information, the second information indicates a repetition type of the message 3, and the repetition type is a first repetition type or a second repetition type; when the message 3 is repeatedly transmitted by using the first repetition type, an index value of a start symbol for each time of repeated transmission of the message 3 is the same; and when the message 3 is repeatedly transmitted by using the second repetition type, an index value of a start symbol for each time of repeated transmission of the message 3 is different.

2.  The method according to claim 1, wherein the method further comprises:
    sending, third information to the terminal device, wherein the third information indicates a frequency hopping mode for repeatedly transmitting the message 3.

3.  The method according to claim 2, wherein the frequency hopping mode comprises one or more of the following:

    a first frequency hopping mode, in which a first frequency domain position is used for first N times of repeated transmission, and a second frequency domain position is used for subsequent M times of repeated transmission, wherein N is an integer greater than 0, M is an integer greater than 0, and N+M is greater than 2; and
a second frequency hopping mode, comprising X times of repeated transmission, wherein frequency domain positions for an $i^{th}$ time of repeated transmission and an $(i+L)^{th}$ time of repeated transmission are the same, and frequency domain positions for at least two times of repeated transmission from the $i^{th}$ time of repeated transmission to an $(i+L-1)^{th}$ time of repeated transmission are different, wherein X is an integer greater than 2, i is 0, 1, ..., or X-1, and L is an integer less than X.

4. The method according to claim 2 or 3, wherein the third information is located in the scheduling information; or the third information is located in a system information block SIB1 or other system information.

5. The method according to any one of claims 1 to 4, wherein the scheduling information further comprises fourth information, and the fourth information indicates a quantity of times of repeated transmission of the message 3.

6. A communication method, comprising:

receiving (303), a random access response from a network device, wherein the random access response comprises scheduling information of a message 3, the scheduling information comprises first information, and the first information indicates to repeatedly transmit the message 3 by using same transmit power and a same precoding matrix; and
repeatedly transmitting (304), the message 3 based on the first information by using the same transmit power and the same precoding matrix as in previous transmissions,
wherein the scheduling information further comprises second information, the second information indicates a repetition type of the message 3, and the repetition type is a first repetition type or a second repetition type; when the message 3 is repeatedly transmitted by using the first repetition type, an index value of a start symbol for each time of repeated transmission of the message 3 is the same; and when the message 3 is repeatedly transmitted by using the second repetition type, an index value of a start symbol for each time of repeated transmission of the message 3 is different.

7. The method according to claim 6, wherein the method further comprises:
receiving, third information from the network device, wherein the third information indicates a frequency hopping mode for repeatedly transmitting the message 3.

8. The method according to claim 7, wherein the frequency hopping mode comprises one or more of the following:

a first frequency hopping mode, in which a first frequency domain position is used for first N times of repeated transmission, and a second frequency domain position is used for subsequent M times of repeated transmission, wherein N is an integer greater than 0, M is an integer greater than 0, and N+M is greater than 2; and
a second frequency hopping mode, comprising X times of repeated transmission, wherein frequency domain positions for an $i^{th}$ time of repeated transmission and an $(i+L)^{th}$ time of repeated transmission are the same, and frequency domain positions for at least two times of repeated transmission from the $i^{th}$ time of repeated transmission to an $(i+L-1)^{th}$ time of repeated transmission are different, wherein X is an integer greater than 2, i is 0, 1, ..., or X-1, and L is an integer less than X.

9. The method according to claim 8, wherein the third information is located in the scheduling information; or the third information is located in a system information block SIB1 or other system information.

10. The method according to any one of claims 6 to 9, wherein the scheduling information further comprises fourth information, and the fourth information indicates a quantity of times of repeated transmission of the message 3.

11. A communications apparatus, configured to perform the method according to any one of claims 1 to 10.

12. A computer-readable storage medium, wherein the storage medium stores a computer program or instructions, and when the computer program or the instructions are executed by a communication apparatus, the method according to any one of claims 1 to 10 is implemented.

13. A chip, comprising a processor, wherein the processor is coupled to a memory, and when the processor executes a computer program or instructions stored in the memory, the method according to any one of claims 1 to 10 is performed.

**Patentansprüche**

1. Kommunikationsverfahren, umfassend:

   Empfangen (301) einer Direktzugriffsanforderung von einem Endgerät; und
   Senden (302) einer Direktzugriffsantwort an das Endgerät, wobei die Direktzugriffsantwort Planungsinformationen einer Nachricht 3 umfasst, die Planungsinformationen erste Informationen umfassen und die ersten Informationen dem Endgerät anzeigen, die Nachricht 3 unter Verwendung einer gleichen Übertragungsleistung und einer gleichen Vorcodierungsmatrix wie bei vorherigen Übertragungen wiederholt zu übertragen,
   wobei die Planungsinformationen ferner zweite Informationen umfassen, die zweiten Informationen einen Wiederholungstyp der Nachricht 3 anzeigen und der Wiederholungstyp ein erster Wiederholungstyp oder ein zweiter Wiederholungstyp ist; wobei,
   wenn die Nachricht 3 unter Verwendung des ersten Wiederholungstyps wiederholt übertragen wird, ein Indexwert eines Startsymbols für jedes Mal einer wiederholten Übertragung der Nachricht 3 der gleiche ist; und wobei,
   wenn die Nachricht 3 unter Verwendung des zweiten Wiederholungstyps wiederholt übertragen wird, ein Indexwert eines Startsymbols für jedes Mal einer wiederholten Übertragung der Nachricht 3 unterschiedlich ist.

2. Verfahren nach Anspruch 1, wobei das Verfahren ferner Folgendes umfasst:
   Senden dritter Informationen an das Endgerät, wobei die dritten Informationen einen Frequenzsprungmodus zum wiederholten Übertragen der Nachricht 3 anzeigen.

3. Verfahren nach Anspruch 2, wobei der Frequenzsprungmodus einen oder mehrere der Folgenden umfasst:

   einen ersten Frequenzsprungmodus, bei dem eine erste Frequenzbereichsposition für erste N Mal wiederholter Übertragung verwendet wird und eine zweite Frequenzbereichsposition für darauffolgende M Mal wiederholter Übertragung verwendet wird, wobei N eine ganze Zahl größer als 0 ist, M eine ganze Zahl größer als 0 ist und N+M größer als 2 ist; und
   einen zweiten Frequenzsprungmodus, der X Mal wiederholter Übertragung umfasst, wobei Frequenzbereichspositionen für ein i-tes Mal wiederholter Übertragung und ein (i+L)-tes Mal wiederholter Übertragung die gleichen sind und Frequenzbereichspositionen für mindestens zwei Mal wiederholter Übertragung von dem i-ten Mal wiederholter Übertragung bis zu einem (i+L-1)-ten Mal wiederholter Übertragung unterschiedlich sind, wobei X eine ganze Zahl größer als 2 ist, i 0, 1, ... oder X-1 ist und L eine ganze Zahl kleiner als X ist.

4. Verfahren nach Anspruch 2 oder 3, wobei sich die dritten Informationen in den Planungsinformationen befinden; oder sich die dritten Informationen in einem Systeminformationsblock, SIB1, oder anderen Systeminformationen befinden.

5. Verfahren nach einem der Ansprüche 1 bis 4, wobei die Planungsinformationen ferner vierte Informationen umfassen und die vierten Informationen eine Anzahl von Malen wiederholter Übertragung der Nachricht 3 anzeigen.

6. Kommunikationsverfahren, umfassend:

   Empfangen (303) einer Direktzugriffsantwort von einem Netzwerkgerät, wobei die Direktzugriffsantwort Planungsinformationen einer Nachricht 3 umfasst, die Planungsinformationen erste Informationen umfassen und die ersten Informationen anzeigen, die Nachricht 3 unter Verwendung einer gleichen Übertragungsleistung und einer gleichen Vorcodierungsmatrix wiederholt zu übertragen; und
   wiederholtes Übertragen (304) der Nachricht 3 basierend auf den ersten Informationen unter Verwendung der gleichen Übertragungsleistung und der gleichen Vorcodierungsmatrix wie bei vorherigen Übertragungen,
   wobei die Planungsinformationen ferner zweite Informationen umfassen, die zweiten Informationen einen Wiederholungstyp der Nachricht 3 anzeigen und der Wiederholungstyp ein erster Wiederholungstyp oder ein zweiter Wiederholungstyp ist; wobei,
   wenn die Nachricht 3 unter Verwendung des ersten Wiederholungstyps wiederholt übertragen wird, ein Indexwert eines Startsymbols für jedes Mal einer wiederholten Übertragung der Nachricht 3 der gleiche ist; und wobei,
   wenn die Nachricht 3 unter Verwendung des zweiten Wiederholungstyps wiederholt übertragen wird, ein Indexwert eines Startsymbols für jedes Mal einer wiederholten Übertragung der Nachricht 3 unterschiedlich ist.

7. Verfahren nach Anspruch 6, wobei das Verfahren ferner Folgendes umfasst:
   Empfangen dritter Informationen von dem Netzwerkgerät, wobei die dritten Informationen einen Frequenzsprungmodus zum wiederholten Übertragen der Nachricht 3 anzeigen.

8.  Verfahren nach Anspruch 7, wobei der Frequenzsprungmodus einen oder mehrere der Folgenden umfasst:

    einen ersten Frequenzsprungmodus, bei dem eine erste Frequenzbereichsposition für erste N Mal wiederholter Übertragung verwendet wird und eine zweite Frequenzbereichsposition für darauffolgende M Mal wiederholter Übertragung verwendet wird, wobei N eine ganze Zahl größer als 0 ist, M eine ganze Zahl größer als 0 ist und N+M größer als 2 ist; und
    einen zweiten Frequenzsprungmodus, der X Mal wiederholter Übertragung umfasst, wobei Frequenzbereichspositionen für ein i-tes Mal wiederholter Übertragung und ein (i+L)-tes Mal wiederholter Übertragung die gleichen sind und Frequenzbereichspositionen für mindestens zwei Mal wiederholter Übertragung von dem i-ten Mal wiederholter Übertragung bis zu einem (i+L-1)-ten Mal wiederholter Übertragung unterschiedlich sind, wobei X eine ganze Zahl größer als 2 ist, i 0, 1, ... oder X-1 ist und L eine ganze Zahl kleiner als X ist.

9.  Verfahren nach Anspruch 8, wobei sich die dritten Informationen in den Planungsinformationen befinden; oder sich die dritten Informationen in einem Systeminformationsblock, SIB1, oder anderen Systeminformationen befinden.

10. Verfahren nach einem der Ansprüche 6 bis 9, wobei die Planungsinformationen ferner vierte Informationen umfassen und die vierten Informationen eine Anzahl von Malen wiederholter Übertragung der Nachricht 3 anzeigen.

11. Kommunikationsvorrichtung, die dazu konfiguriert ist, das Verfahren nach einem der Ansprüche 1 bis 10 durchzuführen.

12. Computerlesbares Speichermedium, wobei das Speichermedium ein Computerprogramm oder Anweisungen speichert und, wenn das Computerprogramm oder die Anweisungen durch eine Kommunikationsvorrichtung ausgeführt werden, das Verfahren nach einem der Ansprüche 1 bis 10 umgesetzt wird.

13. Chip, umfassend einen Prozessor, wobei der Prozessor mit einem Speicher gekoppelt ist und, wenn der Prozessor ein Computerprogramm oder Anweisungen, die in dem Speicher gespeichert sind, ausführt, das Verfahren nach einem der Ansprüche 1 bis 10 durchgeführt wird.

**Revendications**

1.  Procédé de communication, comprenant :

    la réception (301) d'une demande d'accès aléatoire provenant d'un dispositif terminal ; et
    l'envoi (302), d'une réponse d'accès aléatoire au dispositif terminal, dans lequel la réponse d'accès aléatoire comprend des informations de planification d'un message 3, les informations de planification comprennent de premières informations, et les premières informations indiquent au dispositif terminal de transmettre de manière répétée le message 3 à l'aide d'une même puissance de transmission et d'une même matrice de précodage que lors des transmissions précédentes,
    dans lequel les informations de planification comprennent également de deuxièmes informations, les deuxièmes informations indiquent un type de répétition du message 3, et le type de répétition est un premier type de répétition ou un second type de répétition ; lorsque le message 3 est transmis de manière répétée à l'aide du premier type de répétition, une valeur d'index d'un symbole de départ pour chaque instant de transmission répétée du message 3 est la même ; et lorsque le message 3 est transmis de manière répétée à l'aide du second type de répétition, une valeur d'index d'un symbole de départ pour chaque instant de transmission répétée du message 3 est différente.

2.  Procédé selon la revendication 1, dans lequel le procédé comprend également :
    l'envoi de troisièmes informations au dispositif terminal, dans lequel les troisièmes informations indiquent un mode de saut de fréquence pour transmettre de manière répétée le message 3.

3.  Procédé selon la revendication 2, dans lequel le mode de saut de fréquence comprend l'un ou plusieurs des éléments suivants :

    un premier mode de saut de fréquence, dans lequel une première position de domaine fréquentiel est utilisée pour les N premiers instants de transmission répétée, et une seconde position de domaine fréquentiel est utilisée pour les M instants de transmission répétée suivants, dans lequel N est un entier supérieur à 0, M est un entier supérieur à 0, et N+M est supérieur à 2 ; et

un second mode de saut de fréquence, comprenant X instants de transmission répétée, dans lequel des positions de domaine fréquentiel pour un i$^{\text{ème}}$ instant de transmission répétée et un (i+L)$^{\text{ème}}$ instant de transmission répétée sont les mêmes, et des positions de domaine fréquentiel pour au moins deux instants de transmission répétée à partir du i$^{\text{ème}}$ instant de transmission répétée jusqu'à un (i+L-1)$^{\text{ème}}$ instant de transmission répétée sont différentes, dans lequel X est un entier supérieur à 2, i est 0, 1, ..., ou X-1, et L est un entier inférieur à X.

4. Procédé selon la revendication 2 ou 3, dans lequel les troisièmes informations sont situées dans les informations de planification ; ou les troisièmes informations sont situées dans un bloc d'informations système SIB1 ou d'autres informations système.

5. Procédé selon l'une quelconque des revendications 1 à 4, dans lequel les informations de planification comprennent également de quatrièmes informations, et les quatrièmes informations indiquent un nombre d'instants de transmission répétée du message 3.

6. Procédé de communication, comprenant :

la réception (303) d'une réponse d'accès aléatoire provenant d'un dispositif réseau, dans lequel la réponse d'accès aléatoire comprend des informations de planification d'un message 3, les informations de planification comprennent de premières informations, et les premières informations indiquent de transmettre de manière répétée le message 3 à l'aide de la même puissance de transmission et d'une même matrice de précodage ; et la transmission de manière répétée (304) du message 3 sur la base des premières informations à l'aide de la même puissance de transmission et de la même matrice de précodage que dans les transmissions précédentes, dans lequel les informations de planification comprennent également de deuxièmes informations, les deuxièmes informations indiquent un type de répétition du message 3, et le type de répétition est un premier type de répétition ou un second type de répétition ; lorsque le message 3 est transmis de manière répétée à l'aide du premier type de répétition, une valeur d'index d'un symbole de départ pour chaque instant de transmission répétée du message 3 est la même ; et lorsque le message 3 est transmis de manière répétée à l'aide du second type de répétition, une valeur d'index d'un symbole de départ pour chaque instant de transmission répétée du message 3 est différente.

7. Procédé selon la revendication 6, dans lequel le procédé comprend également :
la réception de troisièmes informations provenant du dispositif réseau, dans lequel les troisièmes informations indiquent un mode de saut de fréquence pour transmettre de manière répétée le message 3.

8. Procédé selon la revendication 7, dans lequel le mode de saut de fréquence comprend l'un ou plusieurs des éléments suivants :

un premier mode de saut de fréquence, dans lequel une première position de domaine fréquentiel est utilisée pour les N premiers instants de transmission répétée, et une seconde position de domaine fréquentiel est utilisée pour les M instants de transmission répétée suivants, dans lequel N est un entier supérieur à 0, M est un entier supérieur à 0, et N+M est supérieur à 2 ; et
un second mode de saut de fréquence, comprenant X instants de transmission répétée, dans lequel des positions de domaine fréquentiel pour un i$^{\text{ème}}$ instant de transmission répétée et un (i+L)$^{\text{ème}}$ instant de transmission répétée sont les mêmes, et des positions de domaine fréquentiel pour au moins deux instants de transmission répétée à partir du i$^{\text{ème}}$ instant de transmission répétée jusqu'à un (i+L-1)$^{\text{ème}}$ instant de transmission répétée sont différentes, dans lequel X est un entier supérieur à 2, i est 0, 1, ..., ou X-1, et L est un entier inférieur à X.

9. Procédé selon la revendication 8, dans lequel les troisièmes informations sont situées dans les informations de planification ; ou les troisièmes informations sont situées dans un bloc d'informations système SIB1 ou d'autres informations système.

10. Procédé selon l'une quelconque des revendications 6 à 9, dans lequel les informations de planification comprennent également de quatrièmes informations, et les quatrièmes informations indiquent un nombre d'instants de transmission répétée du message 3.

11. Appareil de communication, configuré pour réaliser le procédé selon l'une quelconque des revendications 1 à 10.

12. Support de stockage lisible par ordinateur, dans lequel le support de stockage stocke un programme informatique ou des instructions, et lorsque le programme informatique ou les instructions sont exécutés par un appareil de communication, le procédé selon l'une quelconque des revendications 1 à 10 est mis en œuvre.

13. Puce, comprenant un processeur, dans laquelle le processeur est couplé à une mémoire, et lorsque le processeur exécute un programme informatique ou des instructions stockés dans la mémoire, le procédé selon l'une quelconque des revendications 1 à 10 est réalisé.

FIG. 1

FIG. 2

```
┌──────────┐                    ┌──────────┐
│ Network  │                    │ Terminal │
│ device   │                    │ device   │
└──────────┘                    └──────────┘
```

Random access
request

301: A network device receives
a random access request from
a terminal device

302: The network device sends
a random access response to the
terminal device

Random access response

303: The terminal device
receives the random access
response from the network
device

304: The terminal device
repeatedly transmits the message 3
based on the first information by
using same transmit power and a
same precoding matrix

305: The network device performs
joint channel estimation on the
repeatedly transmitted message 3, and
sends a contention resolution message
to the terminal device based on a result
of the joint channel estimation

Contention
resolution message

FIG. 3

FIG. 4

FIG. 5

Frequency

0<sup>th</sup> time of repeated transmission

First time of repeated transmission

Second time of repeated transmission

Third time of repeated transmission

Time

FIG. 6

Frequency

0<sup>th</sup> time of repeated transmission

First time of repeated transmission

Second time of repeated transmission

Third time of repeated transmission

Time

FIG. 7

FIG. 8

FIG. 9

FIG. 10

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3697139 A1